# EUROPÄISCHE PATENTSCHRIFT

(11) **EP 3 977 903 B1**
(45) Veröffentlichungstag und Bekanntmachung des Hinweises auf die Patenterteilung: **04.09.2024**
(21) Anmeldenummer: 21198739.1
(22) Anmeldetag: 24.09.2021
(51) Int. Cl.: A47K 3/30, F16B 5/06

(54) **BEFESTIGUNGSELEMENT, HALTEANORDNUNG UND DUSCHABTRENNUNG**
FASTENING ELEMENT, HOLDING DEVICE AND SHOWER PARTITION
ÉLÉMENT DE FIXATION, AGENCEMENT DE MAINTIEN ET PAROI DE DOUCHE

(30) Priorität: 30.09.2020 DE 202020004129 U; 12.12.2020 DE 202020005161 U
(43) Veröffentlichungstag der Anmeldung: 06.04.2022
(73) Patentinhaber: Schulte Duschkabinenbau GmbH & Co. KG, 59846 Sundern-Hachen (DE)
(72) Erfinder: Albers, Martin, 59846 Sundern (DE)
(74) Vertreter: Häckel, Stefan

(56) Entgegenhaltungen:
- EP-A1- 2 959 812
- WO-A1-2011/034669
- WO-A1-2018/051138
- DE-U1- 202008 012 393
- DE-U1- 202013 103 043
- ES-T3- 2 139 297
- GB-A- 2 429 030

## Beschreibung

Die vorliegende Erfindung betrifft eine Halteanordnung gemäß dem Oberbegriff des Anspruchs 1 und eine Duschabtrennung gemäß dem Oberbegriff des Anspruchs 11 sowie eine Verwendung gemäß dem Oberbegriff des Anspruchs 12.

Das Befestigungselement dient insbesondere zur Befestigung eines Halteteils, das vorzugsweise Teil einer Halteanordnung ist und insbesondere als Profil ausgebildet ist. Die Halteanordnung dient insbesondere einer wandseitigen oder sonstigen Anbindung oder Halterung einer zugeordneten Scheibe bzw. Tür oder Trennwand, vorzugsweise einer Duschabtrennung.

Als Halteteil wird insbesondere ein U-förmiges Profil genutzt, das an einer Wand durch Verschrauben oder Verkleben befestigt wird. Die Montage der Halteordnung bzw. des Halteteils an der Wand ist jedoch vergleichsweise aufwendig, insbesondere kann ein unerwünschtes Verrutschen des Halteteils beim Anzeichnen oder Vorbohren bzw. Verschrauben bzw. vor dem endgültigen Festlegen zu Montagefehlern führen, insbesondere wenn die Montage nur durch eine Person erfolgt.

Die DE 20 2013 103 043 U1 betrifft eine Türgruppe umfassend einen stationären Rahmen mit einer Substratseite, wobei die Substratseite wenigstens ein erstes Durchgangsloch aufweist. Weiter weist die Türbaugruppe ein Klebeelement und eine Verriegelungsbaugruppe auf, wobei die Verriegelungsbaugruppe ein Befestigungselement mit einem Verankerungsteil und einem Hebelmechanismus aufweist, der zwischen einer ersten und einer zweiten Person beweglich ist, um mit dem Verankerungsteil verriegelt bzw. von diesem gelöst zu werden. Die Breite des Befestigungselements ist geringer als die Breite der Substratseite, sodass, wenn das Befestigungselement an das Klebeelement geklebt wird, der stationäre Rahmen transversal bewegt werden kann.

Die WO 2018/051138 A1 betrifft eine Befestigung zur Befestigung einer Duschabtrennung an einer Wand. Ein Basisteil kann mittels einer Befestigungseinheit an eine Wand angeschraubt werden. Die Befestigungseinheit hat einen Körper mit einem T-förmigen Querschnitt. In einer zentralen Bohrung des Körpers ist ein Zapfen angeordnet, der ein dezentral angeordnetes Loch für eine Befestigungsschraube aufweist, sodass durch Rotation des Zapfens in dem Körper der Körper und damit das Halteteil verstellbar ist.

Die EP 076 986 B1 betrifft ein Verbindungselement mit einem Haltebereich und einem Befestigungsbereich. Der Haltebereich besitzt ein federndes Element, welches zum Eingriff in einem weiteren Teil angeordnete Öffnung geeignet ist.

Die WO 2011/034669 A1 betrifft ein Rastklemmsystem. Es ist ein Rastclipbefestigungselement offenbart, das Flügelelemente aufweist, die eine entsprechende Aufnahmeöffnung in einem zweiten Element durchgreifen. Das Rastclipbefestigungselement kann mittels Kleben an einem ersten Element befestigt werden.

Die GB 2 429 030 A betrifft eine Befestigung für eine Duschabtrennung. Ein Halteteil kann mittels eines T-förmigen Befestigungsteils an einer Wand befestigt werden.

Aufgabe der vorliegenden Erfindung ist es, ein Befestigungselement, eine Halteanordnung und eine Duschabtrennung anzugeben, wobei eine einfache, schnelle, kostengünstige und/oder sichere Montage einer Duschabtrennung oder eines Bauteils der Duschabtrennung ermöglicht oder unterstützt wird.

Die obige Aufgabe wird durch eine Halteanordnung gemäß Anspruch 1, eine Duschabtrennung gemäß Anspruch 11 oder eine Verwendung gemäß Anspruch 12 gelöst. Vorteilhafte Weiterbildungen sind Gegenstand der Unteransprüche.

Das vorschlagsgemäße Befestigungselement weist eine Befestigungsfläche zur Fixierung an der Wand und einen Befestigungsabschnitt zur vorzugsweise formschlüssigen Halterung des Halteteils auf. Der Befestigungsabschnitt kann vorzugsweise betätigt bzw. verformt werden, dass die Befestigungsfläche zur Fixierung bzw. zum Ankleben an die Wand angelegt bzw. angedrückt wird.

Insbesondere ist das Befestigungselement derart ausgebildet, dass die Befestigungsfläche erst an die Wand herangeführt wird, wenn der Befestigungsabschnitt oder ein sonstiger Teil des Befestigungselements betätigt bzw. auf diesen eine Kraft ausgeführt wird, die zur Anlage der Befestigungsfläche an der Wand führt.

Das Befestigungselement bzw. dessen Befestigungsfläche ist im vorfixierten bzw. befestigten Zustand des Halteteils mit der Wand fest verbunden bzw. verklebt.

Das vorschlagsgemäße Befestigungselement dient der Vorfixierung bzw. Befestigung des, insbesondere profilförmigen, Halteteils. Das Halteteil ist vorzugsweise Bestandteil einer Halteanordnung bzw. Duschabtrennung.

Das Halteteil kann optional bereits durch das Befestigungselement ausreichend sicher bzw. fest an der Wand befestigt werden. Vorzugsweise erfolgt zunächst nur eine Vorfixierung des Halteteils mittels eines oder mehrerer Befestigungselemente und danach die eigentliche Festlegung oder Befestigung des Halteteils an der Wand (oder einem sonstigem Bauteil) durch zusätzliche Befestigungsmittel, bevorzugt wenigstens einer Schraube und/oder einer entsprechenden (belastbaren bzw. dauerhaften) Verklebung.

Das vorschlagsgemäße Befestigungselement ist vorzugsweise in einer Öffnung des Halteteils anordnenbar oder durchgreift diese Öffnung, so dass die Befestigungsfläche zur Wand weist. Der Befestigungsabschnitt kann im in der Öffnung angeordneten bzw. diese durchgreifenden Zustand das Halteteil hintergreifen, um das Halteteil formschlüssig senkrecht zur Wand zu halten, wenn die Befestigungsfläche an der Wand fixiert ist bzw. wird.

Das Befestigungselement ist insbesondere zunächst derart bzw. beabstandet zur Wand in dem Halteteil angeordnet, dass noch keine feste Verbindung zwischen Befestigungsfläche und Wand hergestellt wird, wenn das Halteteil an die Wand angelegt wird. Dieser Zustand wird nachfolgend auch als vormontierter Zustand bezeichnet.

Das vorschlagsgemäße Befestigungselement ermöglicht eine einfache, präzise bzw. sichere sowie kostengünstige erste Verbindung zwischen dem Halteteil und der Wand zur Vorfixierung. So kann das Halteteil über das Befestigungselement nicht nur einfach an die Wand angeordnet werden, sondern die nachfolgenden Schritte zur weiteren bzw. endgültigen Befestigung des Halteteils an der Wand können in dem vorfixierten Zustand wesentlich leichter durchgeführt werden. Letztlich kann das Befestigungselement als Montagehilfe angesehen werden, die die Montage vereinfacht, indem es eine Vorfixierung an der Wand ermöglicht.

Bei der Vorfixierung ist es besonders bevorzugt, dass das Halteteil an der Wand ausgerichtet wird und in dieser Ausrichtung durch das Befestigungselement an der Wand im vorfixierten Zustand gehalten werden kann, wobei insbesondere auch eine Nachjustierung (gewissen Verschiebung des Halteteils) bei an der Wand angebrachtem Befestigungselement noch möglich ist.

Erfindungsgemäß wird daher eine komfortable und sichere Handhabung bei der Montage erreicht bzw. ermöglicht. Auch die Flexibilität wird bei der Ausrichtung des Halteteils an der Wand erhöht, insbesondere dadurch, dass vorzugsweise nach der Befestigung des Befestigungselements an der Wand noch eine gewisse Nachjustierung des Halteteils durch Relativverschiebung zum Befestigungselement möglich ist.

Vorzugsweise ist das Befestigungselement in bzw. an dem Halteteil bei Auslieferung bereits vormontiert bzw. darin integriert.

Gemäß einem weiteren Aspekt kann jedoch auch das Befestigungselement unabhängig von dem Halteteil bereitgestellt und insbesondere erst am Montageort mit dem Halteteil verbunden, in dieses eingesetzt und/oder mit dem Halteteil verklemmt, also vormontiert werden.

Eine vorschlagsgemäße Halteanordnung umfasst das Halteteil und mindestens ein Befestigungselement der vorgenannten Art zur Vorfixierung bzw. Befestigung des Halteteils an einer Wand. Insbesondere weist die Halteanordnung mindestens zwei Befestigungselemente zur Vorfixierung des vorzugsweise profilförmigen Halteteils an der Wand auf. So ergeben sich die genannten Vorteile.

Eine vorschlagsgemäße Duschabtrennung weist eine Halteanordnung der vorgenannten Art auf, die zur Befestigung an einer Wand vorgesehen bzw. an einer Wand befestigt ist. So können entsprechende Vorteile erreicht werden.

Die Duschabtrennung kann eine der Halteanordnung zugeordnete Scheibe aufweisen, die mittels der Halteanordnung an der Wand befestigbar bzw. fixierbar ist, wobei die Scheibe insbesondere über die Halteanordnung gehalten werden wird.

Darüber hinaus kann gemäß einem weiteren Aspekt auch eine Verwendung vorgesehen sein, bei der das Halteteil über das Befestigungselement an der Wand befestigt bzw. vorfixiert wird.

Die Befestigungsfläche des Befestigungselements wird mit der Wand verbunden bzw. verklebt, nachdem das Halteteil an der Wand zumindest grob ausgerichtet worden ist.

Vorzugsweise wird das Halteteil mittels mehrerer Befestigungselemente mit der Wand verbunden bzw. an dieser vorfixiert.

Eine zusätzliche bzw. endgültige oder hochbelastbare Verbindung des Halteteils mit der Wand erfolgt vorzugsweise nach der Vorfixierung, insbesondere indem das Halteteil mit der Wand direkt verklebt und/oder verschraubt wird.

Die genannten und sich aus der nachfolgenden Beschreibung ergebenden Aspekte und Merkmale sind insbesondere unabhängig voneinander, aber auch in beliebiger Kombination realisierbar.

Zusätzliche Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: eine schematische perspektivische Darstellung einer erfindungsgemäßen Duschabtrennung;
- Fig. 2: eine schematische perspektivische Darstellung einer erfindungsgemäßen Halteanordnung mit einem erfindungsgemäßen Befestigungselement gemäß einer ersten Ausführungsform;
- Fig. 3: eine schematische perspektivische Darstellung des Befestigungselements;
- Fig. 4: eine schematische perspektivische Darstellung der Halteanordnung mit noch nicht vormontiertem Befestigungselement;
- Fig. 5: eine schematische perspektivische Darstellung entsprechend Fig. 4 der Halteanordnung mit vormontiertem Befestigungselement;
- Fig. 6: eine Detailansicht von Fig. 5;
- Fig. 7: einen schematischen Längsschnitt der Halteanordnung mit vormontiertem Befestigungselement;
- Fig. 8: einen schematischen Schnitt entlang der Linie VIII-VIII von Fig. 7;
- Fig. 9: einen schematischen Längsschnitt der in Fig. 7 gezeigten Halteanordnung mit fixiertem Befestigungselement;
- Fig. 10: einen schematischen Schnitt entlang der Linie X-X von Fig. 9;
- Fig. 11: einen schematischen Schnitt einer alternativen Ausführungsform der erfindungsgemäßen Halteanordnung und des erfindungsgemäßen Befestigungselements;
- Fig. 12: eine schematische perspektivische Darstellung einer weiteren Ausführungsform des erfindungsgemäßen Befestigungselements;
- Fig. 13: eine schematische perspektivische Darstellung der Halteanordnung mit noch nicht vormontiertem Befestigungselement gemäß Fig. 12; und
- Fig. 14: einen schematischen Schnitt der Halteanordnung mit vormontiertem Befestigungselement gemäß Fig. 12 und 13.

In den teilweise nicht maßstabsgerechten bzw. schematischen Figuren werden für ähnliche oder gleiche Teile dieselben Bezugszeichen verwendet, wobei entsprechende oder vergleichbare Eigenschaften und Vorteile erreicht werden, auch wenn eine wiederholte Beschreibung weggelassen ist.

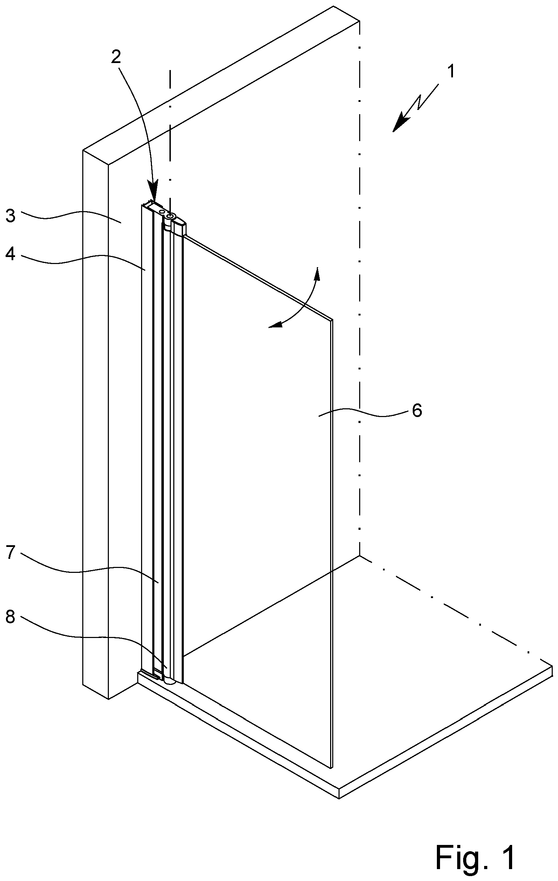

Fig. 1 zeigt eine vorschlagsgemäße Duschabtrennung 1 mit einer vorschlagsgemäßen Halteanordnung 2 mit einem vorzugsweise profilförmigen Halteteil (Wandprofil) 4 gemäß einer bevorzugten Ausführungsform. Die Halteanordnung 2 ist vorzugsweise jedoch auch für andere Zwecke einsetzbar.

Die Halteanordnung 2 ist vorzugsweise Bestandteil einer Profilanordnung, insbesondere wobei an dem Halteteil 4 weitere Bauteile, wie ein weiteres Profil 7 oder 8, der Profilanordnung angeordnet bzw. angebracht werden können.

Die Duschabtrennung 1 weist vorzugsweise eine Tür oder Scheibe 6 auf, die über die Halteanordnung 2 an einer Wand 3 befestigt bzw. befestigbar ist.

Vorzugsweise weist die Duschabtrennung 1 bzw. die Halteanordnung 2 ein Halteprofil 7 auf, das relativ zum Halteteil (Wandprofil) 4 verstellbar und von diesem gehalten ist und vorzugsweise die Scheibe 6 insbesondere mittelbar hält.

Vorzugsweise ist die Scheibe 6 - insbesondere schwenkbar - mit der Halteanordnung 2 verbunden oder verbindbar. Zur schwenkbaren Lagerung der Tür oder Scheibe 6 an der Halteanordnung 2 können entsprechende Scharniere oder beispielsweise ein Drehprofil 8 eingesetzt bzw. angebracht werden, wie in Fig. 1 schematisch angedeutet.

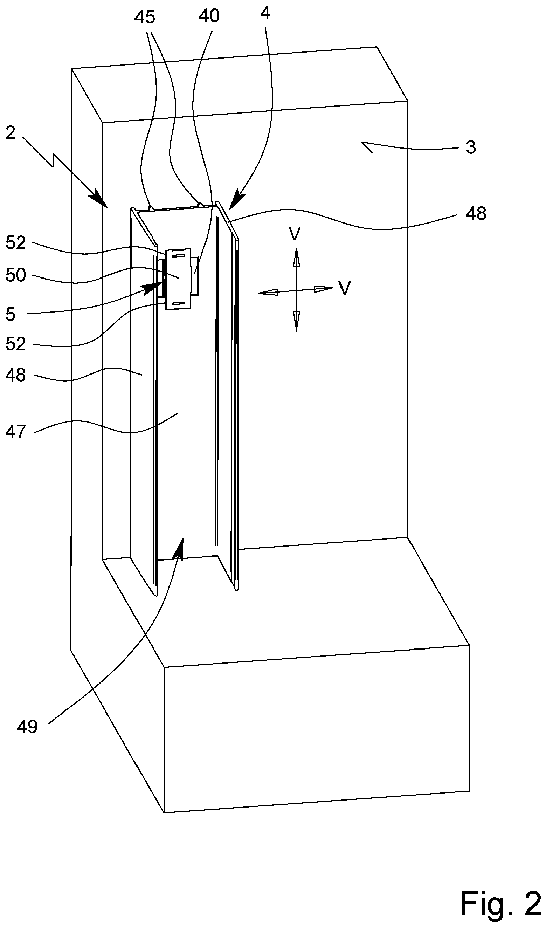

Fig. 2 zeigt die vorschlagsgemäße Halteanordnung 2 mit dem Halteteil 4 und einem erfindungsgemäßen Befestigungselement 5 in einem vormontierten Zustand.

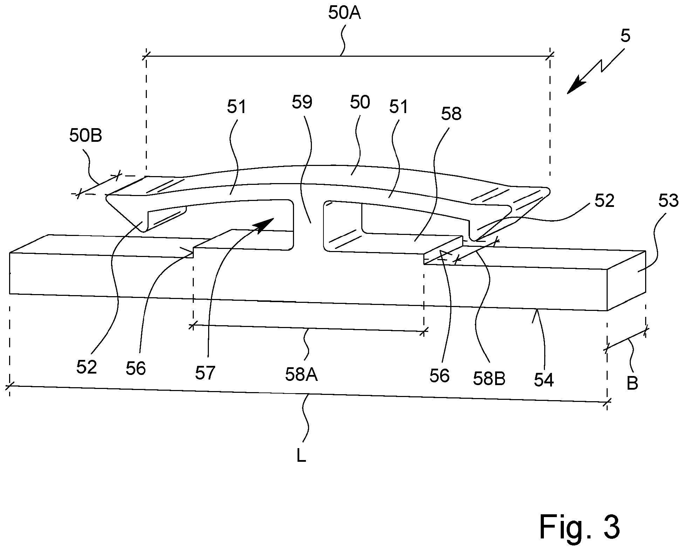

In Fig. 3 ist das Befestigungselement 5 näher gezeigt, das der Vorfixierung bzw. Befestigung des Halteteils 4 an der Wand 3 oder einem sonstigen Bauteil dient. Das Befestigungselement 5 wird bei der Duschabtrennung 1 bzw. Halteanordnung 2 eingesetzt, um das Halteteil 4 an der Wand 3 vorzufixieren bzw. zu befestigen.

Insbesondere kann das Befestigungselement 5 bzw. können mehrere Befestigungselemente 5 das Halteteil 4 an der Wand 3 für die weitere Montage bzw. für eine spätere zusätzliche oder endgültige bzw. dauerbelastbare Verbindung bzw. Festlegung des Halteteils 4 an der Wand 3, vorzugsweise durch Verschrauben oder Verkleben sichern bzw. vorfixieren.

Alternativ ist das Halteteil 4 zumindest im Wesentlichen ausschließlich über wenigstens ein Befestigungselement 5, insbesondere über eine Mehrzahl von Befestigungselementen 5, an der Wand 3 befestigt bzw. befestigbar.

Insbesondere erfolgt die Vorfixierung bzw. Befestigung des Halteteils 4 an der Wand 3 über zwei oder mehr Befestigungselemente 5, auch wenn nachfolgend meistens nur auf ein Befestigungselement 5 Bezug genommen wird.

Das Befestigungselement 5 weist vorzugsweise eine Befestigungsfläche 54 und einen Befestigungsabschnitt 50 auf, wobei der Befestigungsabschnitt 50 vorzugsweise einer zur Betätigung des Befestigungselements 5 bzw. einem Andrücken der Befestigungsfläche 54 an die Wand 3 und/oder einer vorzugsweise formschlüssigen Verbindung des Befestigungselements 5 mit dem Halteteil 4 dient.

Vorzugsweise ist die Befestigungsfläche 54 an einem Anlageelement 53 des Befestigungselements 5 angeordnet gebildet und/oder selbstklebend bzw. als Klebefläche ausgebildet.

Die vorzugsweise rechteckige Befestigungsfläche 54 kann die zur Wand 3 weisende Außenseite des Anlageelements 53 bilden. Beim Darstellungsbeispiel erstreckt sich die Befestigungsfläche 54 über die gesamte Außenseite des Anlageelements 53.

Vorzugsweise ist die Befestigungsfläche 54 als Klebefläche ausgebildet, so dass insbesondere die Befestigungsfläche 54 stoffschlüssig mit der Wand 3 verklebt werden kann. Jedoch kann auch Klebstoff oder ein Klebepad oder doppelseitig klebendes Klebeband oder dergleichen separat aufgebracht werden, um eine wandseitige Verklebung zu ermöglichen.

Optional kann auch vorgesehen sein, dass alternativ oder zusätzlich die Befestigungsfläche 54 mit der Wand 3 reibschlüssig bzw. kraftschlüssig verbunden wird bzw. worden ist, insbesondere mit der Wand 3 verschraubt wird bzw. worden ist.

Vorzugsweise weist der Befestigungsabschnitt 50 einen, zwei oder mehrere, insbesondere federnde Arme bzw. Schenkel 51 auf, um die Öffnung 40 im eingesetzten Zustand zu hintergreifen.

Die Schenkel 51 sind vorzugsweise endseitig jeweils mit einem optional angeschrägten Vorsprung 52 versehen.

Die Schenkel 51 können auch derart gestaltet sein, dass sie aufgrund ihrer federnden Eigenschaften in die Öffnung 40 einführbar sind.

Insbesondere ist das Anlageelement 53 mit dem Befestigungsabschnitt 50 über einen Verbindungsabschnitt 57 verbunden.

Bevorzugt weist der Verbindungsabschnitt 57 bzw. das Anlageelement 53 einen Begrenzungsabschnitt 58 und/oder ein vorzugsweise stegförmiges bzw. schmales Verbindungsteil 59 auf.

Der Begrenzungsabschnitt 58 kann unmittelbar an der der Wand 3 abgewandten Flachseite bzw. an der dem Halteteil 4 zugewandten Flachseite des Anlageelements 53 angeordnet sein.

Vorzugsweise ist der Begrenzungsabschnitt 58 zumindest in der vormontierten Position des Anlageelements 53 in der Öffnung 40 angeordnet, um ein seitliches Bewegen bzw. Verschieben des Befestigungselements 5 parallel zur Wandebene und zu der später genannten Verstellrichtung V zu begrenzen und/oder des Befestigungselements 5 in der Öffnung 40 zu zentrieren.

Vorzugsweise ist das Befestigungselement 5 bzw. Anlageelement 53 zumindest im Wesentlichen quaderförmig ausgebildet, wobei letzteres insbesondere die äußere Struktur, insbesondere die äußeren Maximalabmessungen, des Befestigungselements 5 bildet.

Vorzugsweise ist die Länge 50A des Befestigungsabschnittes 50 kleiner als die Länge L der Befestigungsfläche 54. Insbesondere kann die Länge 50A des Befestigungsabschnittes 50 um wenigstens 10 %, bevorzugt wenigstens 20 % und weiter bevorzugt um wenigstens 25 %, geringer sein als die Länge L der Befestigungsfläche 54.

Insbesondere ist vorgesehen, dass die Breite 50B des Befestigungsabschnittes 50 zumindest im Wesentlichen der Breite B der Befestigungsfläche 54 entspricht. So kann sichergestellt sein, dass der Befestigungsabschnitt 54 nicht wesentlich über die Befestigungsfläche 54 übersteht.

Im Darstellungsbeispiel ist vorgesehen, dass das Befestigungselement 5 einstückig ausgebildet ist. Unter einer einstückigen Ausbildung wird im Sinne der vorliegenden Erfindung auch verstanden, wenn unterschiedliche Bestandteile des Befestigungselements 5 miteinander stoffschlüssig, vorzugsweise nicht zerstörungsfrei lösbar, verbunden sind.

Bei einer alternativen, ebenfalls bevorzugten Ausführungsform ist vorgesehen, dass das Befestigungselement 5 derart ausgebildet ist, dass wenigstens der Befestigungsabschnitt 50 mit der Befestigungsfläche 54 und/oder dem Verbindungsabschnitt 57 zusammensteckbar, vorzugsweise verrastbar, ausgebildet ist. Insbesondere kann auch ein Zusammenstecken der Bestandteile des Befestigungselements 5 zur Montage des Halteteils 4 an der Wand 3 erfolgen.

Auch können die zusammensteckbaren Teile des Befestigungselements 5 derart ausgebildet sein, dass diese zur Hindurchführung des Befestigungselements 5 durch die Öffnung 40 miteinander verrastbar sind, insbesondere ohne dass federnde Eigenschaften der Bestandteile des Befestigungselements 5 benötigt werden oder insbesondere ohne dass das Befestigungselement 5 beim Einsetzen in die Öffnung 40 gedreht werden muss. Insbesondere kann vorgesehen sein, dass wenigstens zwei unterschiedliche Bestandteile oder Bestandteilgruppen des Befestigungselements 5 miteinander verbunden werden.

Das Verbindungsteil 59 kann den Begrenzungsabschnitt 58 mit dem Befestigungsabschnitt 50 verbinden.

Vorzugsweise weist/weisen das Befestigungselement 5, das Anlageelement 53, der Befestigungsabschnitt 50 und/oder der Begrenzungsabschnitt 58 einen zumindest im Wesentlichen rechteckförmigen Querschnitt auf und/oder sind zumindest im Wesentlichen quaderförmig ausgebildet.

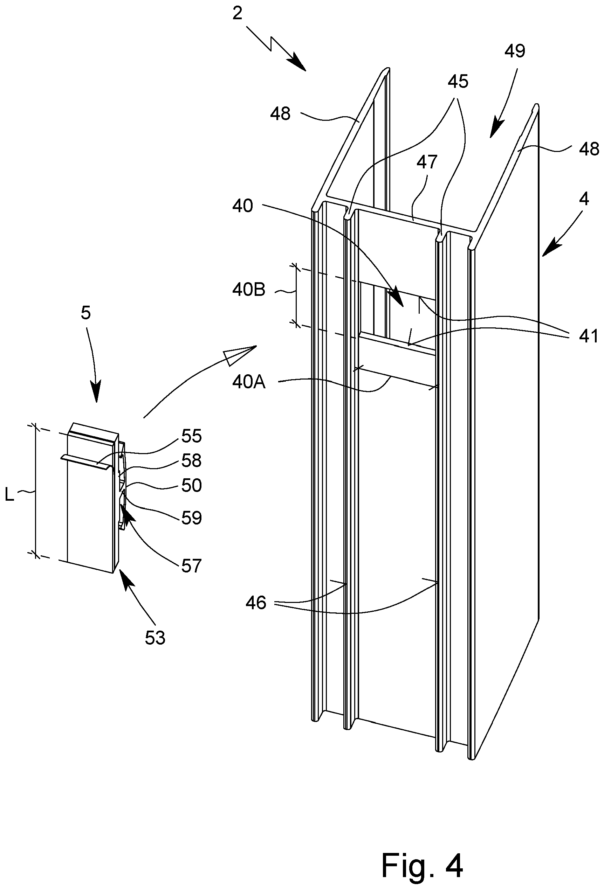

Fig. 4 zeigt die Halteanordnung 2 in einem nicht montierten Zustand, bei dem das Befestigungselement 5 noch nicht mit dem Halteteil 4 verbunden ist.

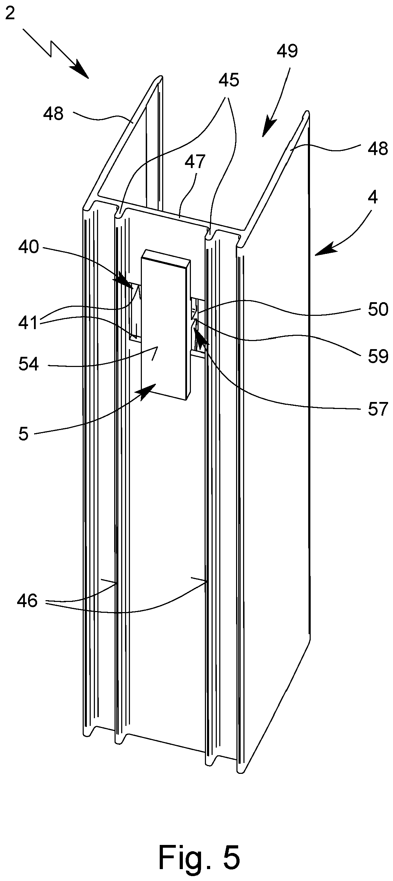

Fig. 5 zeigt die in Fig. 4 dargestellte Halteanordnung 2, wobei das Befestigungselement 5 mit dem Halteteil 4 verbunden bzw. in dieses eingesetzt, also vormontiert ist. Bei dem in Fig. 5 dargestellten Zustand durchgreift das Befestigungselement 5 bzw. der Befestigungsabschnitt 50 eine Öffnung 40 des Halteteils 4 und/oder hintergreift diese, mit mindestens einem Abschnitt, Arm oder Schenkel 51.

Das Befestigungselement 5 wird mit dem Halteteil 4 verbunden, insbesondere indem der Befestigungsabschnitt 50 in die Öffnung 40 eingesetzt bzw. eingeführt und - vorzugsweise um 90° +/- 15° - gedreht wird. So ergibt sich insbesondere der in Fig. 5 gezeigte, vormontierte Zustand.

Insbesondere wird das Befestigungselement 5 solange verdreht bzw. gedreht, bis das Befestigungselement 5 bzw. der Befestigungsabschnitt 50 oder dessen Schenkel 51 zumindest bereichsweise das Halteteil 4 bzw. die Öffnung 40 hintergreift bzw. bis jeder Schenkel 51 mit seinem Vorsprung 52 die die Öffnung 40 umgebende Wandung hinter- bzw. übergreift.

Bevorzugt hintergreift das Befestigungselement 5 im vormontierten Zustand das Halteteil 4 derart, dass ein Verrutschen des Befestigungselements 5 in der Öffnung 40 - zumindest in dem vormontierten Zustand bei von Wand 3 abgehobener bzw. zurückgezogener Befestigungsfläche 54 - verhindert werden kann und/oder dass das Befestigungselement 5 an dem Halteteil 4 vorfixiert ist.

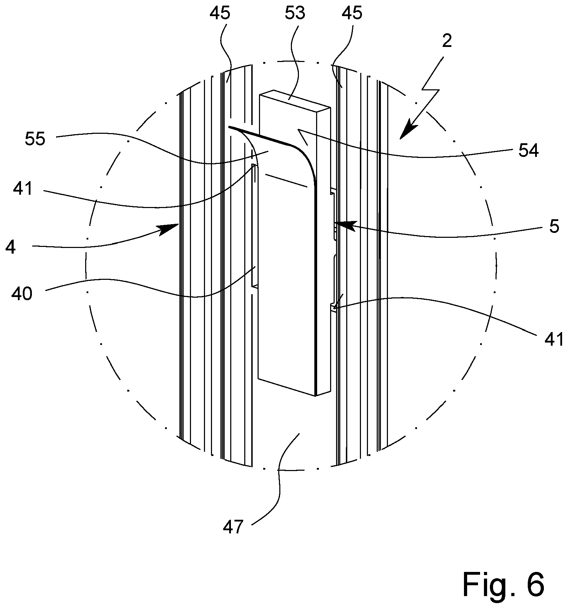

Insbesondere ist die Klebefläche der Befestigungsfläche 54 mit einem Liner 55 abgedeckt, wie schematisch in Fig. 4 und 6 gezeigt. Die Fig. 6 ist eine Detailansicht des in die Öffnung 40 des Halteteils 4 eingesetzten Befestigungselements 5 aus Fig. 5. Vorzugsweise wird der Liner 55 vor Befestigung bzw. Ankleben der Befestigungsfläche 54 an der Wand 3 entfernt.

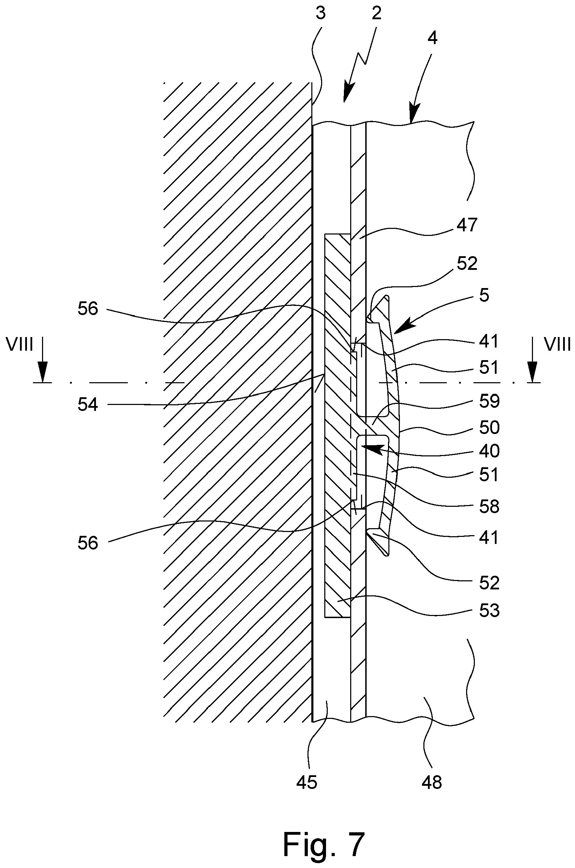

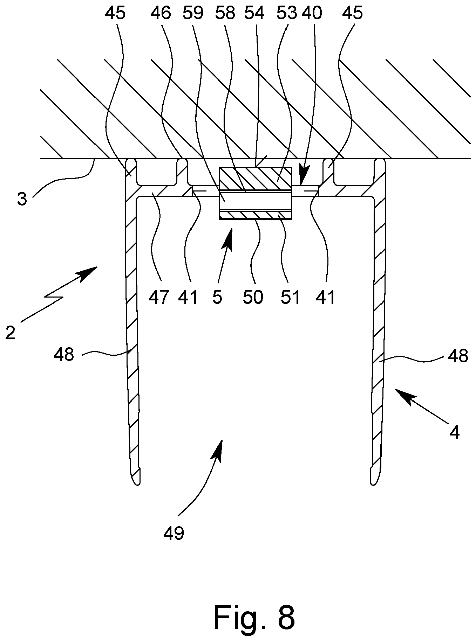

Fig. 7 zeigt in einem Längsschnitt die Halteanordnung 2 mit vormontiertem Befestigungselement 5 im nicht fixierten Zustand an der Wand 3 und Fig. 8 einen Schnitt entlang Linie III-VIII von Fig. 7. Das Befestigungselement 5 durchgreift bzw. hintergreift die Öffnung 40 des Halteteils 4, wobei die Befestigungsfläche 54 zur Wand 3 weist und noch von der Wand 3 beabstandet bzw. nicht damit verbunden ist.

Vorzugsweise ist der Begrenzungsabschnitt 58 derart ausgebildet, dass vor der Vorfixierung bzw. Befestigung an der Wand 3 der Begrenzungsabschnitt 58 bzw. das Befestigungselement 5 zumindest weitgehend spielfrei bezüglich der Öffnungsebene oder der Längsrichtung des Halteteils 4 in der Öffnung 40 gehalten bzw. angeordnet ist.

Vorzugsweise weist der Begrenzungsabschnitt 58 wenigstens einen, bevorzugt stirnseitig und/oder randseitig angeordneten, Anschlag 56, insbesondere zum Anschlagen an die Begrenzungsrandflächen 41 der Öffnung 40, auf. Insbesondere dient der Anschlag 56 bzw. die Mehrzahl der Anschläge 56 zur Begrenzung der relativen Bewegung bzw. Relativbewegung zwischen Halteteil 4 und Befestigungselement 5 und/oder zur Zentrierung des Befestigungselements 5 in der Öffnung 40.

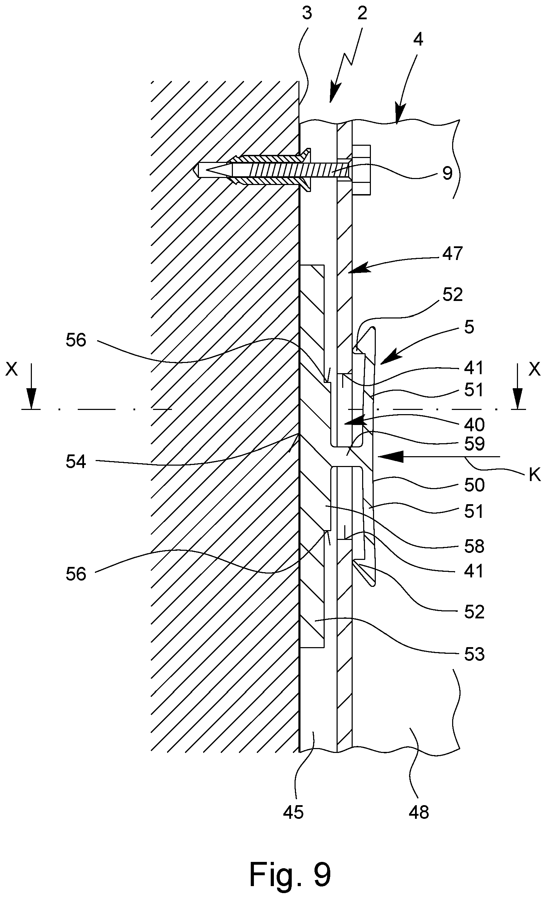

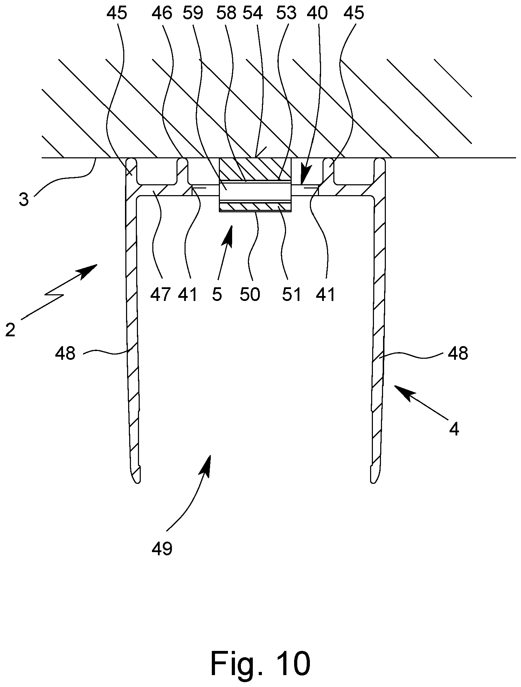

Fig. 9 und Fig. 10 zeigen in zu Fig. 7 und 8 korrespondieren Schnitten die Halteanordnung im vorfixierten zustand, also mit an der Wand 3 befestigtem Befestigungselement 5 sowie zusätzlich gestrichelt eine endgültige Befestigung des Halteteils 4, hier mittels einer Schraube 9.

In Fig. 9 ist schematisch eine auf dem Befestigungsabschnitt 50 bzw. auf die Schenkel 51 ausgeübte Kraft K dargestellt, durch die die Befestigungsfläche 54 an die Wand 3 andrückbar ist. Durch die ausgeübte Kraft und das Anlegen des Befestigungselements 5 an der Wand 3 werden der Befestigungsabschnitt 50 und damit die Schenkel 51 elastisch verformt. Entsprechend wird hierdurch das Halteteil 4 im montierten Zustand gegen die Wand 3 gedrückt bzw. gespannt. Die Fig. 7 und Fig. 8 zeigen hingegen den unbelasteten Zustand des Befestigungsabschnittes 50, bei dem keine Kraft auf den Befestigungsabschnitt 50 ausgeübt wird.

Insbesondere drücken die federnden Schenkel 51 das Halteteil 4 im vorfixierten Zustand gegen die Wand 3.

Im an der Wand 3 befestigten bzw. vorfixierten Zustand des Halteteils 4 kann der Begrenzungsabschnitt 58 entweder außerhalb oder weiterhin in der Öffnung 40 liegen bzw. von dieser - zumindest bereichsweise - noch aufgenommen sein. Im letztgenannten Fall kann dadurch insbesondere ein Absinken des Halteteils 4 bei vertikaler Ausrichtung an der Wand 3 im vorfixierten Zustand vermieden werden, wenn der Reibschluss zwischen Arm/Schenkel 51 bzw. Vorsprung 52 und Halteteil 4 nicht ausreicht.

Die Fig. 9 und 10 zeigen, dass der Begrenzungsabschnitt 58 bei an der Wand 3 befestigtem Anlageelement 53 vorzugsweise außerhalb der Öffnung 40 angeordnet ist.

Beim Darstellungsbeispiel ist das Halteteil 4 vorzugsweise profilförmig bzw. als (Basis-)Profil ausgebildet. Zudem kann das Halteteil 4 im Querschnitt bzw. in seiner Außenkontur zumindest im Wesentlichen C- oder U-förmig ausgebildet sein.

Beim Darstellungsbeispiel weist das Halteteil 4 ein Bodenteil 47 und vorzugsweise mindestens einen Halteschenkel 48, bevorzugt zwei Halteschenkel 48, auf, die über das Bodenteil 47 miteinander verbunden sind.

Das, insbesondere U-förmig ausgebildete, Halteteil 4 ist insbesondere zu der der Wand 3 abgewandten Seite bzw. an der der Scheibe 6 zugewandten Seite offen, insbesondere derart, dass weitere Profilteile zumindest teilweise in das Halteteil 4 einsetzbar bzw. einschiebbar sind.

Das Halteteil 4 weist vorzugsweise einen Aufnahmeraum 49 für das Halteprofil 7 auf.

Insbesondere bilden, definieren oder begrenzen das Bodenteil 47 und die Halteschenkel 48 den Aufnahmeraum 49.

Vorzugsweise durchgreift das Befestigungselement 5 die als Durchbruch ausgebildete Öffnung 40 einer Wandung bzw. des Bodenteils 47 des Halteteils 4, insbesondere wobei der Befestigungsabschnitt 50 - zumindest im unbelasteten Zustand - durch die Wandstärke des Bodenteils 47 bzw. des Halteteils 4 von dem Anlageelement 53 beabstandet ist, wie dies die Fig. 7 zeigt.

Fig. 2, 4 bis 6, 8 und 10 zeigen, dass das Halteteil 4 vorzugsweise wenigstens zwei, insbesondere in Längserstreckung des Halteteils 4 verlaufende und gegenüber dem Bodenteil 47 abstehende bzw. zur Wand 3 vorragende Stege bzw. Anlageabschnitte 45 zur Anlage an der Wand 3 aufweist. Beim Darstellungsbeispiel sind letztlich vier, vorzugsweise stegförmige, Anlageabschnitte 45 vorgesehen, insbesondere wobei das Bodenteil 47 bzw. Halteteil 2 im befestigten Zustand (nur) mit den Anlageabschnitten 45 oder deren Längsanten 46 an der Wand 3 anliegt.

Vorzugsweise ist das Anlageelement 53 und/oder die Befestigungsfläche 54 zwischen den Anlageabschnitten 45, insbesondere zwischen den inneren Anlageabschnitten 45 angeordnet.

Fig. 8 zeigt schematisch, dass vor der Vorfixierung bzw. Befestigung an der Wand 3 - also im vormontierten Zustand - die Befestigungsfläche 54 gegenüber den der Wand 3 zugewandten Längskanten 46 der Anlageabschnitte 45 zurückversetzt ist und/oder zumindest nicht über die Anlageabschnitte 45 vorragt.

Fig. 10 zeigt, dass vorzugsweise die Befestigungsfläche 54 im an der Wand 3 vorfixierten bzw. befestigten Zustand zumindest bereichsweise mit den Längskanten 46 der Anlageabschnitte 45 fluchtet bzw. abschließt. Optional kann die Befestigungsfläche 54 zumindest bereichsweise im an der Wand 3 vorfixierten bzw. befestigten Zustand auch über die Längskanten 46 der Anlageabschnitte 45 vorragen kann.

Vorzugsweise weist die als Durchbruch ausgebildete Öffnung 40 des Halteteils 4 eine Längserstreckung 40A auf, die größer oder gleich der Länge L des Befestigungselements 5 bzw. der Länge L der Befestigungsfläche 54 ist, wie schematisch in Fig. 4 angedeutet.

Vorzugsweise weist die als Durchbruch ausgebildete Öffnung 40 eine Höhe 40B auf, die größer oder gleich der Breite B des Befestigungselements 5 bzw. der Breite B der Befestigungsfläche 54 ist.

Die vorgenannten Größenabmessungen der Öffnung 40 ermöglichen, dass das Befestigungselement 5 durch die Öffnung 40 zumindest teilweise hindurchführbar ist, so dass insbesondere der Befestigungsabschnitt 50 und/oder gegebenenfalls das Anlageelement 53 durch die Öffnung 40 hindurchgeführt werden kann.

Bei Bedarf kann das Befestigungselement 5 gegebenenfalls auch schräg in die Öffnung 40 eingesetzt werden und anschließend, insbesondere nachdem der Befestigungsabschnitt 50 durch die Öffnung 40 hindurchgeführt worden ist, in der Öffnung 40 - bevorzugt zum Hintergreifen der Öffnung 40 mit den Schenkeln 51 - verdreht werden.

So kann ein Hintergreifen der Öffnung 40 durch den Befestigungsabschnitt 50 ermöglicht werden, wobei der Befestigungsabschnitt 50 zumindest bereichsweise an dem Bodenteil 47 des Halteteils 4 anliegen kann.

Die Längserstreckung des Befestigungselements 5 im vormontierten und vorfixierten Zustand verläuft bevorzugt parallel zur Längserstreckung des Halteteils 4.

Nach der Vorfixierung des Halteteils 4 an der Wand 3 mit dem Befestigungselement 5 wird das Halteteil 4 vorzugsweise mit der Wand 3 verklebt und/oder mittels eines Befestigungsmittels, bevorzugt mindestens einer Schraube 9, kraftschlüssig und/oder reibschlüssig verbunden, wie in Fig. 9 angedeutet.

Die Fig. 2 zeigt schematisch, dass das Halteteil 4 - vorzugsweise zumindest oder nur im vorfixierten Zustand - relativ zu dem Befestigungselement 5 in wenigstens einer, bevorzugt in wenigstens zwei zueinander senkrechten, Verstellrichtung(en) V parallel zur Wand 3 bewegbar ist. Eine verläuft vorzugsweise zumindest im Wesentlichen quer zur Längserstreckung des Halteteils 4.

Durch diese Verstellbarkeit wird eine Ausrichtung des Halteteils 4 an der Wand 3 auch im vorfixierten Zustand ermöglicht. Dies ermöglicht eine genaue Justierung des Halteprofils 4 an der Wand 3, bevor eine endgültige Festlegung beispielsweise durch Verschrauben mit der Wand 3 erfolgt.

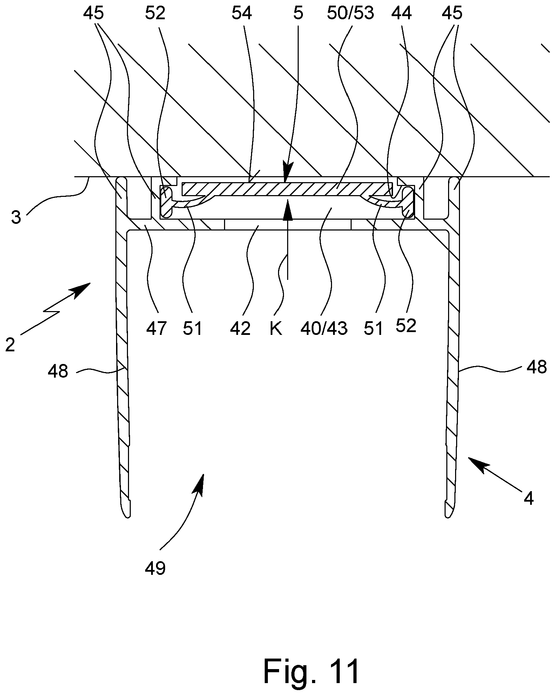

Die in Fig. 11 dargestellte alternative Ausführungsform unterscheidet sich von der in den Fig. 1 bis 10 gezeigten Ausführungsform dahingehend, dass das Befestigungselement 5 die Öffnung 40 nicht durchgreift, sondern vielmehr in der Öffnung 40 angeordnet ist, die hier vorzugsweise durch eine wandseitige Nut 43 bzw. zwischen zwei Schenkeln bzw. Anlageabschnitten 45 gebildet ist.

Das Befestigungselement 5 kann zur Vormontage in die Öffnung 40 bzw. Nut 43 eingedrückt, eingeschwenkt, eingeklemmt und/oder eingeschoben sein bzw. werden.

Vorzugsweise hintergreift das Befestigungselement 5 bzw. der Befestigungsabschnitt 50 die Nut 43 bzw. Hinterschnitte 44, insbesondere in den Nutschenkeln bzw. Anlageabschnitten 45, wie in Fig. 11 angedeutet.

Bevorzugt ist der Befestigungsabschnitt 50 bzw. das Befestigungselement 50 also formschlüssig - zumindest senkrecht zur Wandebene bei aufliegendem Halteteil 4 - in der Nut 43 gehalten.

Alternativ oder zusätzlich ist bevorzugt vorgesehen, dass sich der Befestigungsabschnitt 50 mit dem Halteteil 4, insbesondere in der Öffnung 40, verklemmt bzw. verklemmbar ist.

Vorzugsweise ist der Befestigungsabschnitt 50 über einen Durchbruch 42 - insbesondere auch im in der Öffnung 40 angeordneten Zustand - auf der vor der Wand 3 wegweisenden Seite des Halteteils 4 zugänglich. So kann durch Ausübung einer Kraft auf den Befestigungsabschnitt 50 unter elastischer Verformung des Befestigungsabschnitts 50 oder dessen Arme bzw. Schenkel 51 ein Andrücken bzw. Heranführen und Ankleben der Befestigungsfläche 54 an die Wand 3 bewirkt werden.

Generell wird vor der Befestigung der Befestigungsfläche 54 an der Wand 3 das Halteteil 4 an der Wand 3 ausgerichtet. Im ausgerichteten Zustand kann anschließend insbesondere durch Drücken auf den Befestigungsabschnitt 50 das Befestigungselement 5 an der Wand 3 fixiert bzw. befestigt werden, insbesondere in dem die Befestigungsfläche 54 an die Wand 3 herangeführt bzw. angedrückt und mit dieser vorzugsweise verklebt wird.

Insbesondere wird das Halteteil 4 im vorfixierten Zustand von dem Befestigungselement 5 an die Wand 3 gedrückt.

Nach der Vorfixierung des Halteteils 4 über das Befestigungselement 5 kann auch ein Verschrauben oder ein zusätzliches Verkleben des Halteteils 4 an der Wand 3 erfolgen.

Vorzugsweise wird eine Mehrzahl von Befestigungselementen 5 eingesetzt, die in korrespondierende Öffnungen 40 des Halteteils 4 eingreifen oder diese durchgreifen, um das Halteteil 4 bzw. die Halteanordnung 2 vorzufixieren.

Nachfolgend wird eine weitere Ausführungsform anhand der weiteren Figuren erläutert, wobei insbesondere nur Unterschiede und neue Aspekte besonders hervorgehoben werden, die bisherigen Erläuterungen, Merkmale und Eigenschaften aber vorzugsweise ergänzend oder entsprechend gelten, ohne dass es einer Wiederholung bedarf.

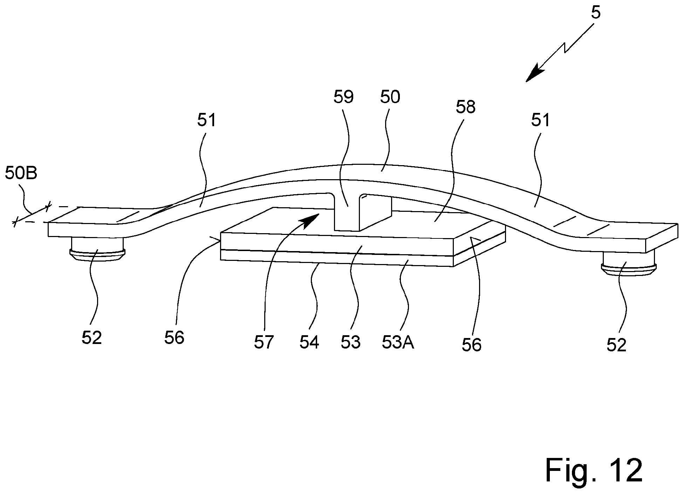

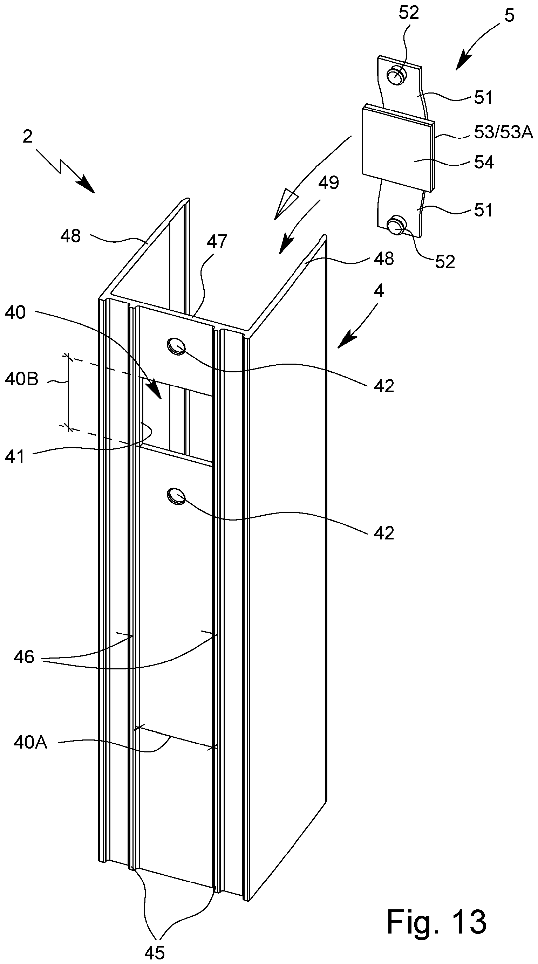

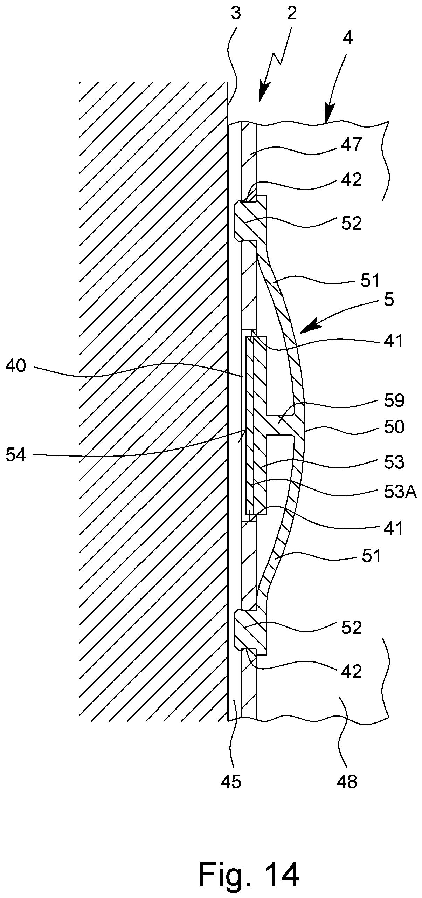

Fig. 12 zeigt eine schematische perspektivische Darstellung der weiteren Ausführungsform des Befestigungselements 5. Die Fig. 13 zeigt das in Fig. 12 dargestellte Befestigungselement 5 mit einem Halteteil 4 im nicht-eingesetzten bzw. nicht montiert Zustand. Fig. 14 zeigt einen schematischen Schnitt der Halteanordnung 2 mit dem mit dem Halteteil 2 verbundenen bzw. vormontierten Befestigungselement 5 im Zustand vor der Vorfixierung bzw. Befestigung an der Wand 3.

Vorzugsweise ist bei der weiteren Ausführungsform das Anlageelement 50 zumindest teilweise in der Öffnung 40 im vormontierten Zustand anordnenbar bzw. in dieser angeordnet.

Bei der weiteren Ausführungsform hintergreift bzw. untergreift das Anlageelement 53 vorzugsweise nicht das Bodenteil 47 bzw. einen sonstigen Abschnitt des Halteteils 4, wie bei den vorherigen Ausführungsformen, sondern ist besonders bevorzugt von der Öffnungsseite des Halteteils 4 bzw. von der der Wand 3 abgewandten Seite in das Halteteil 4 bzw. die Öffnung 40 einführbar oder einsetzbar bzw. gehalten. Dies erleichtert die Vormontage bzw. nachträgliche Anbringung des Befestigungselements 5.

Bei der weiteren Ausführungsform ist also insbesondere ein Verdrehen des Befestigungselements 5 zur Vormontage am Halteteil 4 nicht erforderlich, auch wenn dies grundsätzlich gleichwohl möglich ist.

Besonders bevorzugt wird das Befestigungselement 5 nur über den Befestigungsabschnitt 50 bzw. einen oder mehrere Schenkel 51 bzw. Vorsprünge 52 am Halteteil 4 gehalten, befestigt, verrastet und/oder verklemmt. Die Vorsprünge 52 sind vorzugsweise an einem freien Ende an dem Befestigungsabschnitt 50 und/oder Armen bzw. Schenkeln 51 angeordnet.

Insbesondere kann das in den Fig. 12 bis 14 dargestellte Befestigungselement 5 mit dem Halteteil 4 durch Verrasten verbunden werden.

Bevorzugt ist der Befestigungsabschnitt 50 bzw. das Befestigungselement 5 formschlüssig am Halteteil 4 gehalten bzw. montierbar.

Beim Darstellungsbeispiel greifen die Vorsprünge 52 vorzugsweise in entsprechende Durchbrechungen 42 - insbesondere rastend und/oder klemmend - ein, um das Befestigungselement 5 am Halteteil 4 zu halten bzw. zu montieren.

Die Durchbrechungen 42 sind vorzugsweise auf entgegengesetzten Seiten der Öffnung 40 und/oder in Vertikalrichtung bzw. Längsrichtung des Halteteils 4 versetzt und/oder in der Mitte des Bodenteils 47 und/oder auf einer Mittellinie der Öffnung 40 angeordnet.

Fig. 13 zeigt, dass die Durchbrechungen 42 benachbart zur Öffnung 40 angeordnet sein können, insbesondere wobei die Öffnung 40 zwischen den Durchbrechungen 42 angeordnet ist.

Durch Drücken auf das Befestigungselement 5 bzw. dessen Befestigungsabschnitt 50 kann ausgehend von dem in Fig. 14 gezeigten vormontierten Zustand das Befestigungselement 5 bzw. das Anlageelement 53 gegen die Wand 3 gedrückt und dadurch an der Wand 3 befestigt bzw. an diese angeklebt werden. Die Befestigung erfolgt also vorzugsweise genauso wie bei den vorherigen Ausführungsformen.

Im befestigten bzw. fixierten Zustand hält bzw. spannt das Befestigungselement 5 das Halteteil 4 gegen die Wand 3.

Im Gegensatz zu den vorherigen Ausführungsformen hält das Befestigungselement 5 bei der weiteren Ausführungsform das Halteteil 4 vorzugsweise - beim Darstellungsbeispiel durch Eingriff in eine oder mehrere Durchbrechungen 42 - formschlüssig, sodass eine Feinjustierung bzw. Verschiebung des Halteteils 4 im vorfixierten bzw. befestigten Zustand an der Wand 3 nicht mehr möglich ist.

Das Befestigungselement 5 der weiteren Ausführungsform weist vorzugsweise so wie auch bei den vorherigen Ausführungsformen einen gebogenen und/oder elastisch verformbaren Befestigungsabschnitt 50 bzw. mindestens einen solchen Schenkel 51 auf, um das Anlageelement 53 bzw. seine Befestigungsfläche 54 im vormontierten Zustand beabstandet zur Wand 3 zu halten, bis die eigentliche Befestigung bzw. Vorfixierung unter Verformung des Befestigungsabschnitts 50 bzw. des Schenkels 51 bzw. der Schenkel 51 durch Andrücken an die Wand 3 erfolgt.

Wie bereits erwähnt, gelten die bisherigen Ausführungen und Erläuterungen für die weitere Ausführungsform insbesondere ergänzend, sodass es keiner Wiederholung bedarf.

Generell ist auch anzumerken, dass die Befestigungsfläche 54 des Befestigungselements 5 bzw. Anlageelements 53 vorzugsweise als Klebefläche ausgeführt und/oder durch eine Klebstoffschicht 53A, wie in Fig. 14 angedeutet, besonders bevorzugt gebildet sein kann.

Die Klebstoffschicht 53A kann insbesondere durch ein doppelseitiges Klebeband gebildet sein.

Die Befestigungsfläche 54 der Klebstoffschicht 53A ist vorzugsweise vor dem Gebrauch durch den Liner 55 abgedeckt, wie in Fig. 6 angedeutet.

Jedoch kann die Klebstoffschicht 53A auch beispielsweise erst vor Ort durch einen Klebstoff, beispielsweise durch Auftragen von Montagekleber oder dergleichen realisiert werden.

In jedem Fall ist es vorteilhaft, wenn die Klebeverbindung sehr schnell, insbesondere instantan beim Andrücken eine hohe Klebekraft bzw. Haltekraft bewirkt, um das Halteteil 4 entsprechend schnell und sicher an der Wand 3 vorfixieren oder gegebenenfalls sogar endgültig fixieren zu können.

## Patentansprüche

1. Halteanordnung (2), insbesondere für eine Duschabtrennung (1), mit einem insbesondere profilförmigen Halteteil (4) und einem Befestigungselement (5) zur Vorfixierung bzw. Befestigung des Halteteils (4) an einer Wand (3),
wobei das Befestigungselement (5) eine Befestigungsfläche (54) und einen Befestigungsabschnitt (50) aufweist,, wobei das Befestigungselement (5) in einer Öffnung (40) des Halteteils (4) anordnenbar ist oder diese durchgreift, so dass die Befestigungsfläche (54) des Befestigungselements (5) zur Wand (3) weist, so dass der Befestigungsabschnitt (50) des Befestigungselements (5) das Halteteil (4) hintergreift und so dass das Befestigungselement (5) mit der Befestigungsfläche (54) an der Wand (3) fixierbar bzw. befestigbar, insbesondere anklebbar, ist,
wobei im vorfixierten bzw. befestigten Zustand das Halteteil (4) relativ zu dem Befestigungselement (5) in wenigstens einer Verstellrichtung (V) bewegbar ist, wobei wenigstens eine Verstellrichtung (V) in der Öffnungsebene liegt und/oder parallel zur Wandebene verläuft,
**dadurch gekennzeichnet,**
**dass** das Befestigungselement (5) einen oder mehrere federnde Arme bzw. Schenkel (51) aufweist, um die Öffnung (40) zu hintergreifen und/oder das Halteteil (4) gegen die Wand (3) zu drücken.

2. Halteanordnung nach Anspruch 1, **dadurch gekennzeichnet, dass** das Befestigungselement (5) die als Durchbruch ausgebildete Öffnung (40) einer Wandung bzw. eines Bodenteils (47) des Halteteils (4) durchgreift, wobei der Befestigungsabschnitt (50) an der der Wand (3) abgewandten Seite der Wandung bzw. des Bodenteils (47) angeordnet ist, insbesondere anliegt.

3. Halteanordnung nach Anspruch 1 oder 2, **dadurch gekennzeichnet, dass** die Befestigungsfläche (54) an die Wand (3), insbesondere durch eine auf den Befestigungsabschnitt (50) und/oder den Verbindungsabschnitt (57) ausgeübte Andrücckraft, andrückbar und/oder klebbar ist, so dass das Halteteil (4) mit dem Befestigungselement (3) an der Wand (3) fixierbar bzw. befestigbar ist.

4. Halteanordnung nach einem der voranstehenden Ansprüche, **dadurch gekennzeichnet, dass** das Halteteil (4) wenigstens zwei insbesondere in Längserstreckung des Halteteils (4) verlaufende, von einem Bodenteil (47) des Halteteils (4) abstehende bzw. zur Wand (3) vorragende Anlageabschnitte (45) zur Anlage an der Wand (3) aufweist.

5. Halteanordnung nach einem der voranstehenden Ansprüche, **dadurch gekennzeichnet, dass** ein oder mehrere federnde Schenkel (51) des Befestigungselements (5) die Öffnung (40) hintergreifen und/oder das Halteteil (4) gegen die Wand (3) im montierten Zustand vorspannen.

6. Halteanordnung nach einem der voranstehenden Ansprüche, **dadurch gekennzeichnet, dass** die als Durchbruch ausgebildete Öffnung (40) des Halteteils (4) eine Längserstreckung (40A) aufweist, die größer oder gleich der Länge (5A) des Befestigungselements (5) und/oder der Länge (54A) der Befestigungsfläche (54) ist.

7. Halteanordnung nach einem der voranstehenden Ansprüche, **dadurch gekennzeichnet, dass** die als Durchbruch ausgebildete Öffnung (40) eine Höhe (40B) aufweist, die größer oder gleich der Breite (5B) des Befestigungselements (5) und/oder der Breite (54B) der Befestigungsfläche (54) ist.

8. Halteanordnung nach einem der voranstehenden Ansprüche, **dadurch gekennzeichnet, dass** die Längserstreckung des Befestigungselements (5) im vorfixierten bzw. befestigten Zustand an der Wand (3) parallel zur Längserstreckung des Halteteils (4) verläuft bzw. dass das Befestigungselement (5) in Richtung der Längserstreckung des Halteteils (4), insbesondere des Bodenteils (47), ausgerichtet ist.

9. Halteanordnung nach einem der voranstehenden Ansprüche, **dadurch gekennzeichnet, dass** das Halteteil (4) zwei, bevorzugt als Anlagestege ausgebildete, Anlageabschnitte (45) aufweist, wobei die Anlageabschnitte (45) die Öffnung (40) in Form einer Nut (43) bilden und wobei der Befestigungsabschnitt (50) in die Nut (43) formschlüssig und/oder klemmend eingreift.

10. Halteanordnung nach einem der voranstehenden Ansprüche, **dadurch gekennzeichnet, dass** wenigstens eine Verstellrichtung (V) in oder zumindest im Wesentlichen quer zur Längserstreckung des Halteteils (4), bevorzugt des Bodenteils (47), verläuft.

11. Duschabtrennung (1) mit einer Halteanordnung (2) zur Befestigung an einer Wand (3),
**dadurch gekennzeichnet,**
**dass** die Halteanordnung (2) nach einem der voranstehenden Ansprüche ausgebildet ist.

12. Verwendung eines Befestigungselements (5) zur Vorfixierung bzw. Befestigung eines insbesondere profilförmigen Halteteils (4) einer Duschabtrennung (1) an einer Wand (3),
**dadurch gekennzeichnet,**
**dass** das Befestigungselement (5) in einer Öffnung (40) des Halteteils (4) angeordnet wird oder diese durchgreift und mit einem oder mehreren federnden Schenkeln (51) die Öffnung (40) hintergreift und aus einer zurückgezogenen bzw. abgerückten Position mit einer Befestigungsfläche (54) gegen die Wand (3) bewegt bzw. gedrückt wird, um die Befestigungsfläche (54) an der Wand (3) zu fixieren bzw. befestigen, insbesondere anzukleben, wobei durch die ausgeübte Kraft und das Anlegen des Befestigungselements (5) an der Wand (3) der Befestigungsabschnitt (50) und damit die Schenkel (51) elastisch verformt werden und die federnden Schenkel (51) das Halteteil (4) im vorfixierten Zustand gegen die Wand (3) drücken.

## Claims

1. Holding arrangement (2), in particular for a shower partition (1), having an in particular profile-shaped holding part (4) and a fastening element (5) for pre-fixing and/or fastening the holding part (4) to a wall (3),
wherein the fastening element (5) has a fastening surface (54) and a fastening portion (50), wherein the fastening element (5) is arrangeable in an opening (40) of the holding part (4) or engages therethrough, so that the fastening surface (54) of the fastening element (5) faces the wall (3), so that the fastening portion (50) of the fastening element (5) engages behind the holding part (4) and so that the fastening element (5) with the fastening surface (54) can be fixed and/or fastened, in particular adhered, to the wall (3),
wherein, in the pre-fixed and/or fastened state, the holding part (4) is movable relative to the fastening element (5) in at least one adjustment direction (V), wherein at least one adjustment direction (V) lies in the opening plane and/or runs parallel to the wall plane,
**characterised**
**in that** the fastening element (5) comprises one or more resilient arms and/or legs (51) for engaging behind the opening (40) and/or for pressing the holding part (4) against the wall (3).

2. Holding arrangement according to claim 1, **characterised in that** the fastening element (5) engages through the aperture-formed opening (40) of a wall and/or bottom part (47) of the holding part (4), wherein the fastening portion (50) is arranged on, in particular lies against, the side of the wall and/or bottom part (47) facing away from the wall (3).

3. Holding arrangement according to claim 1 or 2, **characterised in that** the fastening surface (54) can be pressed and/or adhered to the wall (3), in particular by a pressing force exerted on the fastening portion (50) and/or the connecting portion (57), so that the holding part (4) can be fixed and/or fastened to the wall (3) with the fastening element (3).

4. Holding arrangement according to one of the preceding claims, **characterised in that** the holding part (4) comprises at least two contact portions (45), extending in particular in the longitudinal direction of the holding part (4), projecting from a bottom part (47) of the holding part (4) and/or projecting towards the wall (3), for contact with the wall (3).

5. Holding arrangement according to one of the preceding claims, **characterised in that** one or more resilient legs (51) of the fastening element (5) engage behind the opening (40) and/or pretension the holding part (4) against the wall (3) in the mounted state.

6. Holding arrangement according to one of the preceding claims, **characterised in that** the aperture-formed opening (40) of the holding part (4) has a longitudinal extension (40A) which is greater than or equal to the length (5A) of the fastening element (5) and/or the length (54A) of the fastening surface (54).

7. Holding arrangement according to one of the preceding claims, **characterised in that** the aperture-formed opening (40) has a height (40B) which is greater than or equal to the width (5B) of the fastening element (5) and/or the width (54B) of the fastening surface (54).

8. Holding arrangement according to one of the preceding claims, **characterised in that** the longitudinal extension of the fastening element (5) in the pre-fixed and/or fastened state on the wall (3) runs parallel to the longitudinal extension of the holding part (4) and/or **in that** the fastening element (5) is aligned in the direction of the longitudinal extension of the holding part (4), in particular the bottom part (47).

9. Holding arrangement according to one of the preceding claims, **characterised in that** the holding part (4) comprises two contact portions (45), preferably formed as contact webs, wherein the contact portions (45) form the opening (40) in the form of a groove (43) and wherein the fastening portion (50) engages in the groove (43) in a form-fitting and/or clamping manner.

10. Holding arrangement according to one of the preceding claims, **characterised in that** at least one adjustment direction (V) runs in or at least substantially transversely to the longitudinal extension of the holding part (4), preferably of the bottom part (47).

11. Shower partition (1) with a holding arrangement (2) for fastening to a wall (3), **characterised**
**in that** the holding arrangement (2) is configured according to one of the preceding claims.

12. Use of a fastening element (5) for pre-fixing and/or fastening an in particular profile-shaped holding part (4) of a shower partition (1) to a wall (3),
**characterised**
**in that** the fastening element (5) is arranged in an opening (40) of the holding part (4) or engages therethrough and engages behind the opening (40) with one or more resilient legs (51) and is moved and/or pressed against the wall (3) with a fastening surface (54) from a retracted and/or moved-away position in order to fix and/or fasten, in particular adhere, the fastening surface (54) to the wall (3), wherein by the force exerted and the contact of the fastening element (5) against the wall (3), the fastening portion (50) and thus the legs (51) are elastically deformed and the resilient legs (51) press the holding part (4) against the wall (3) in the pre-fixed state.

## Revendications

1. Agencement de support (2), en particulier pour une séparation de douche (1), avec une pièce de support (4) en particulier en forme de profilé et un élément de fixation (5) pour la pré-fixation et/ou la fixation de la pièce de support (4) sur une paroi (3),
l'élément de fixation (5) présentant une surface de fixation (54) et une section de fixation (50), l'élément de fixation (5) pouvant être disposé dans une ouverture (40) de la pièce de support (4) ou traversant celle-ci, de sorte que la surface de fixation (54) de l'élément de fixation (5) est orientée vers la paroi (3), de sorte que la section de fixation (50) de l'élément de fixation (5) s'engage derrière la pièce de support (4) et de sorte que l'élément de fixation (5) peut être fixé et/ou attaché, en particulier collé, à la paroi (3) par la surface de fixation (54),
la pièce de support (4), à l'état pré-fixé et/ou fixé, étant mobile par rapport à l'élément de fixation (5) dans au moins une direction de réglage (V), au moins une direction de réglage (V) étant située dans le plan d'ouverture et/ou s'étendant parallèlement au plan de la paroi,
**caractérisé**
**en ce que** l'élément de fixation (5) présente un ou plusieurs bras et/ou branches élastiques (51) pour s'engager derrière l'ouverture (40) et/ou pour presser la pièce de support (4) contre la paroi (3).

2. Agencement de support selon la revendication 1, **caractérisé en ce que** l'élément de fixation (5) traverse l'ouverture (40), réalisée sous la forme d'un ajour, d'une paroi et/ou d'une pièce de fond (47) de la pièce de support (4), la section de fixation (50) étant disposée, en particulier en appui, sur le côté de la paroi et/ou de la pièce de fond (47) qui est opposé à la paroi (3).

3. Agencement de support selon la revendication 1 ou 2, **caractérisé en ce que** la surface de fixation (54) peut être pressée et/ou collée sur la paroi (3), en particulier par une force de pression exercée sur la section de fixation (50) et/ou la section de liaison (57), de sorte que la pièce de support (4) peut être fixée et/ou attachée à la paroi (3) avec l'élément de fixation (3).

4. Agencement de support selon l'une des revendications précédentes, **caractérisé en ce que** la pièce de support (4) présente au moins deux sections d'appui (45), s'étendant en particulier dans l'extension longitudinale de la pièce de support (4), pour l'appui sur la paroi (3), dépassant d'une pièce de fond (47) de la pièce de support (4) et/ou faisant saillie vers la paroi (3).

5. Agencement de support selon l'une des revendications précédentes, **caractérisé en ce qu'**une ou plusieurs branches élastiques (51) de l'élément de fixation (5) s'engagent derrière l'ouverture (40) et/ou précontraignent la pièce de support (4) contre la paroi (3) à l'état monté.

6. Agencement de support selon l'une des revendications précédentes, **caractérisé en ce que** l'ouverture (40) de la pièce de support (4), réalisée sous la forme d'un ajour, présente une extension longitudinale (40A) qui est supérieure ou égale à la longueur (5A) de l'élément de fixation (5) et/ou à la longueur (54A) de la surface de fixation (54).

7. Agencement de support selon l'une des revendications précédentes, **caractérisé en ce que** l'ouverture (40), réalisée sous la forme d'un ajour, présente une hauteur (40B) qui est supérieure ou égale à la largeur (5B) de l'élément de fixation (5) et/ou à la largeur (54B) de la surface de fixation (54).

8. Agencement de support selon l'une des revendications précédentes, **caractérisé en ce que** l'extension longitudinale de l'élément de fixation (5) à l'état pré-fixé et/ou fixé à la paroi (3) s'étend parallèlement à l'extension longitudinale de la pièce de support (4) et/ou **en ce que** l'élément de fixation (5) est orienté dans la direction de l'extension longitudinale de la pièce de support (4), en particulier de la pièce de fond (47).

9. Agencement de support selon l'une des revendications précédentes, **caractérisé en ce que** la pièce de support (4) présente deux sections d'appui (45), de préférence réalisées sous forme de nervures d'appui, les sections d'appui (45) formant l'ouverture (40) sous forme d'une rainure (43) et la section de fixation (50) s'engageant dans la rainure (43) par complémentarité de forme et/ou par serrage.

10. Agencement de support selon l'une des revendications précédentes, **caractérisé en ce qu'**au moins une direction de réglage (V) s'étend dans ou au moins essentiellement transversalement à l'extension longitudinale de la pièce de support (4), de préférence de la pièce de fond (47).

11. Séparation de douche (1) avec un agencement de support (2) pour la fixation à une paroi (3),
**caractérisée**
**en ce que** l'agencement de support (2) est réalisé selon l'une des revendications précédentes.

12. Utilisation d'un élément de fixation (5) pour la pré-fixation et/ou la fixation d'une pièce de support (4), en particulier en forme de profilé, d'une séparation de douche (1) sur une paroi (3),
**caractérisée**
**en ce que** l'élément de fixation (5) est disposé dans une ouverture (40) de la pièce de support (4) ou traverse celle-ci et s'engage derrière l'ouverture (40) avec une ou plusieurs branches élastiques (51) et, à partir d'une position rétractée et/ou éloignée, est déplacé et/ou pressé avec une surface de fixation (54) contre la paroi (3), pour fixer et/ou attacher, en particulier coller, la surface de fixation (54) à la paroi (3), la section de fixation (50) et donc les branches (51) étant déformées élastiquement par la force exercée et l'application de l'élément de fixation (5) contre la paroi (3), et les branches élastiques (51) pressant la pièce de support (4) contre la paroi (3) à l'état pré-fixé.
